Europäisches Patentamt

European Patent Office

Office européen des brevets

(19)

(11) Numéro de publication : **0 094 273
B1**

(12) **FASCICULE DE BREVET EUROPÉEN**

(45) Date de publication du fascicule du brevet :
21.01.87

(51) Int. Cl.⁴ : **G 11 B  7/26, G 11 B  7/24**

(21) Numéro de dépôt : **83400760.1**

(22) Date de dépôt : **18.04.83**

(54) **Procédé de fabrication d'un disque optique protégé, et disque obtenu par ce procédé.**

(30) Priorité : **27.04.82 FR 8207251**

(43) Date de publication de la demande :
**16.11.83 Bulletin 83/46**

(45) Mention de la délivrance du brevet :
**21.01.87 Bulletin 87/04**

(84) Etats contractants désignés :
**AT DE GB IT NL**

(56) Documents cités :
**EP-A- 0 024 194
EP-A- 0 041 270
PATENTS ABSTRACTS OF JAPAN, vol. 3, no. 159, 27
décembre 1979, page 86 E 162
MACHINE DESIGN, vol. 53, no. 26, 19 novembre 1981,
pages 152-158, Cleveland, USA, "Joining plastic"**

(73) Titulaire : **THOMSON-CSF
173, Boulevard Haussmann
F-75379 Paris Cedex 08 (FR)**

(72) Inventeur : **Lange, François
THOMSON-CSF SCPI 173, bld Haussmann
F-75379 Paris Cedex 08 (FR)**

(74) Mandataire : **Weinmiller, Jürgen
Lennéstrasse 9
D-8133 Feldafing (DE)**

## Description

La présente invention concerne un procédé de fabrication d'un disque optique protégé destiné à l'enregistrement d'informations qui peuvent être par exemple des signaux vidéo-fréquences ou des signaux numériques.

L'invention concerne les supports d'information en forme de disque comportant au moins une couche sensible enregistrable optiquement, cette couche étant enfermée dans une structure la protégeant contre les agents extérieurs.

Pour obtenir une grande densité d'information sur un support peu encombrant, il est connu d'utiliser un disque optique comportant au moins une couche dont les caractéristiques physiques varient dès qu'elle est exposée à un rayonnement, dans laquelle l'information est enregistrée au moyen d'un faisceau lumineux focalisé sous la forme de microéléments diffractants que l'on peut détecter par la suite à l'aide d'un autre faisceau lumineux focalisé en vue de la lecture de l'information. Pour permettre des manipulations aisées et fréquentes par un utilisateur, le disque, pré-inscrit ou vierge, qui sera vendu dans le commerce, doit comporter des protections permettant d'éviter toute influence des poussières, traces de doigt, etc. sur le disque et également toute altération de la couche sensible aux rayonnements.

Des exemples de tels disques sont décrits dans les demandes de brevet français numéros 2 393 394 et 2 355 337 qui préconisent l'utilisation de colles ou d'adhésifs pour l'assemblage d'un capot au support, consistant en un disque optique, par l'intermédiaire d'entretoises. Les colles doivent cependant être judicieusement choisies en fonction de leur compatibilité avec les matériaux des substrats et de la couche sensible, de leur solidité, de leur facilité de mise en œuvre. D'autre part, le collage n'est pas un procédé bien adapté à une fabrication en grande série et de grande fiabilité.

Un procédé mieux adapté consiste à assembler les pièces par soudure, avec échauffement et fusion d'une partie de la matière des pièces à assembler, avec ou sans apport de matière d'appoint. Les disques en matière thermoplastiques se prêtent particulièrement bien à ce procédé. Les différents procédés connus de soudure des thermoplastiques peuvent être envisagés, par exemple les procédés par lame chauffante, par friction, par champs électriques haute-fréquence, par rayon laser et par ultra-sons. Ce dernier procédé est particulièrement bien adapté au disque optique ; le chauffage très localisé et très bref limite les risques de détérioration de la couche sensible au voisinage d'un cordon de soudure ou zone en relief en forme d'anneau qui sera soudée.

Cependant de nombreux disques obtenus par soudure présentent une forme bombée, la déformation atteignant dans certains cas plusieurs millimètres. Ce phénomène peut s'expliquer par le retrait thermique ou contraction lors du refroidissement de la matière du cordon de soudure après sa solidification ultérieure à son réchauffement pour réaliser la soudure. En effet au cours de son refroidissement depuis la température de solidification jusqu'à la température ambiante il y a retrait du cordon de soudure et celui-ci comprime le disque à la manière d'une frette. De plus le disque constituant une structure mince, si cette compression dépasse une valeur critique, elle provoque le flambement du disque, qui est la courbure de celui-ci du fait de la compression qu'il a subie, qui conduit à une déformation de ce disque.

Le but de l'invention est de pallier ces inconvénients en réalisant des disques optiques protégés dans lesquels tout ou partie des pièces constitutives est assemblé par soudage et dans lesquels les déformations sont ramenées à des valeurs acceptables.

Ce but est, en principe, atteint en remplaçant le cordon de soudure par deux ou plusieurs cordons parallèles et rapprochés, de dimensions inférieures à celles du cordon unique qu'ils remplacent.

L'invention a pour objet un procédé de fabrication d'un disque optique protégé comprenant :

- une première étape de création d'un support plan circulaire en matière thermoplastique comprenant une zone d'inscription annulaire plane de même axe de symétrie que celui du support et d'au moins un capot de protection en matière thermoplastique, ce support (1) et chaque capot comprenant des zones de jonction par soudure ; ces zones situées sur ce support se trouvant de part et d'autre de la zone d'inscription ;

une deuxième étape de positionnement de chaque capot de protection par rapport à ce support selon un même axe de symétrie que celui de ce support, de façon à délimiter au moins une chambre annulaire surplombant une zone d'inscription ;

une troisième étape d'échauffement consistant à produire à l'emplacement desdites zones de jonction des joints de soudure continus qui solidarisent ce support et chaque capot de protection, deux au moins de ces joints de soudure continus assurant l'étanchéité de ladite chambre annulaire ;

caractérisé en ce que pendant ladite troisième étape chacune des zones de jonction donne naissance à au moins deux joints de soudure continus épousant la forme d'anneaux ; les anneaux appartenant à une même zone de jonction étant séparés l'un de l'autre par une distance comprise dans la gamme de 0,4 à 6 millimètres.

Elle a également pour objet un disque optique protégé suivant la revendication 10.

L'invention sera mieux comprise à l'aide de la description qui suit en référence aux figures annexées :

les figures 1 à 4 représentent des disques protégés de l'art connu ;

les figures 5 et 6 illustrent le procédé de fabrication du disque optique protégé selon l'invention ;

les figures 7 et 9 représentent des variantes du dispositif obtenu par le procédé selon l'invention ;

la figure 10 illustre un aspect particulier du dispositif obtenu par le procédé selon l'invention.

Ces différentes figures illustrent ce disque optique protégé représenté en partie : une symétrie par rapport à l'axe de rotation permettrait de l'obtenir en totalité.

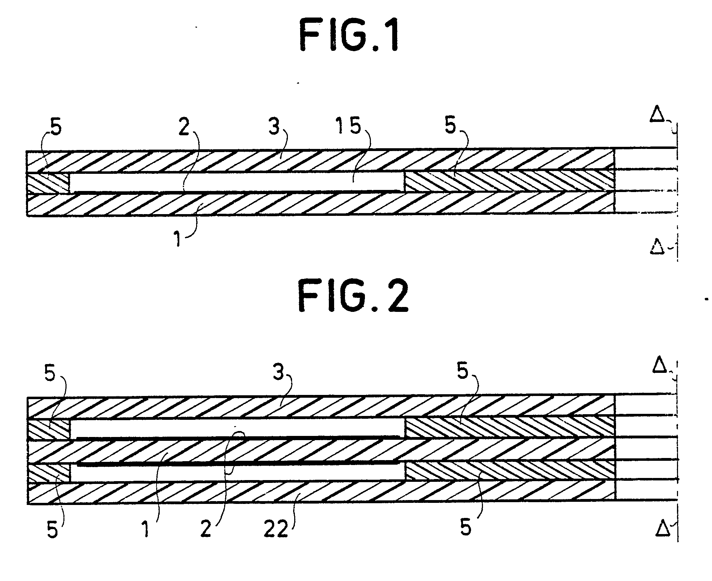

Deux exemples de disques optiques protégés de l'art connu sont représentés sur les figures 1 et 2. Ils ont été obtenus par un procédé de fabrication de ce disque optique protégé par solidarisation d'au moins un capot 3 (22) à un support plan circulaire que l'on appelera dans la suite « disque optique » 1 par l'intermédiaire d'entretoises 5, ces différents éléments ayant été collés entre eux. L'enregistrement et la lecture de l'information se font sur une couche sensible 2 déposée sur un support 1 en forme de disque par un faisceau de rayonnement traversant soit le support 1, soit le capot 3, la couche 2 se trouvant à l'intérieur de l'espace protégé délimité par le support 1 et le capot 3. La figure 2 représente un type de disque double face comprenant un support 1 compris entre deux capots 3 et 4. Supports et capots sont solidarisés par des entretoises circulaires 5 qui maintiennent la distance requise entre capot et support et assurent l'étanchéité et la rigidité de l'ensemble. Ces entretoises peuvent aussi faire partie intégrante soit du support soit du capot. Des pièces peu coûteuses peuvent par exemple être réalisées en matière plastique injectée.

Un autre procédé de fabrication d'un disque optique protégé consiste à assembler les pièces par soudure, avec échauffement et fusion d'une partie de la matière des pièces à assembler, avec ou sans apport de matière d'appoint en utilisant par exemple des disques en matière thermoplastique. Il existe différents procédés connus de soudure des thermoplastiques par exemple des procédés par lame chauffante, par friction, par champs électriques haute-fréquence, par rayon laser et par ultra-sons. Ce dernier procédé est particulièrement bien adapté au disque optique ; le chauffage très localisé et très bref limite les risques de détérioration de la couche sensible au voisinage du cordon de soudure, ou moulure en relief, en forme d'anneau qui permet la soudure ; cette moulure en relief existant préalablement à la soudure sur l'un des éléments que l'on veut solidariser.

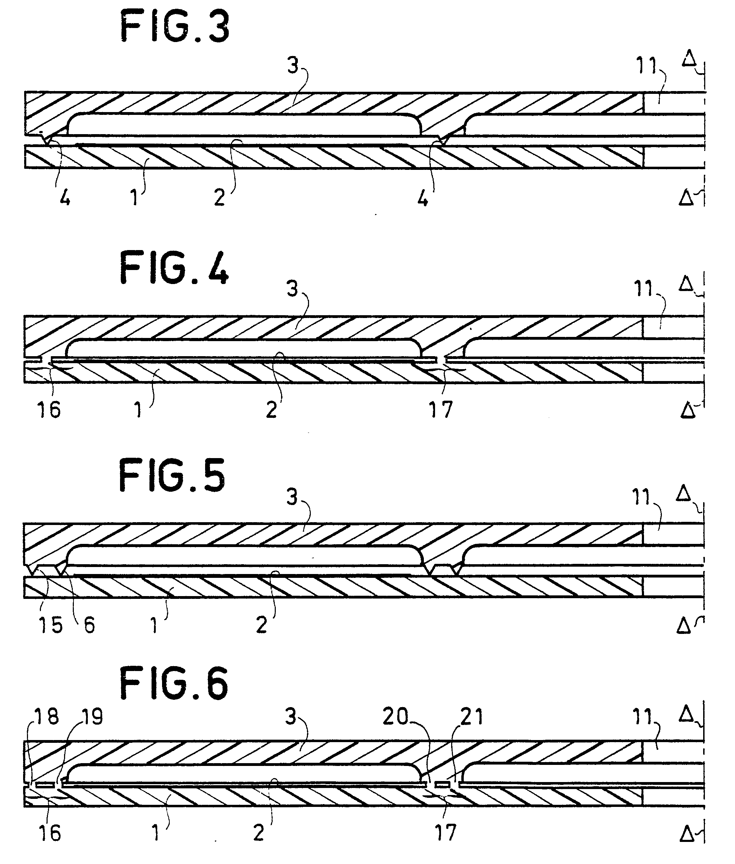

La figure 3 montre un exemple de support plan circulaire 1 et de capot 3 pour soudage par ultra-sons selon une technique de l'art connu. Le capot 3, évidé vis-à-vis de la zone gravée 2 du support 1 repose sur ce dernier par des protubérances circulaires 4 en forme de pointes. Le capot 3 ainsi que les pointes 4 qu'il comprend ainsi que le disque qui réalise le support sont en matériau thermoplastique, c'est-à-dire qu'ils se ramollissent à la chaleur et se solidifient ensuite, permettant de réaliser ainsi une soudure. Ces pointes servent à concentrer l'énergie ultra-sonore qui provoque leur fusion ainsi que celle de la matière du support au voisinage immédiat de cette pointe. La figure 4 représente le disque protégé après soudure. Des dimensions usuelles des pointes peuvent être de 0,3 à 1 millimètre pour la hauteur et de 0,4 à 1,3 millimètre pour la largeur.

Dans la suite de la description, on considère un support plan circulaire 1 que l'on dénommera dans la suite disque optique 1, et un capot 3 en matière thermoplastique, ce peut être par exemple du polyméthacrylate de méthyl ou PMMA ; cette matière permettant donc la soudure.

On utilise en effet un disque en matière thermoplastique qui, ramollissant lors d'une élévation de température, est soudable. Dans le procédé de l'invention, le disque 1 et le capot de protection 3 sont reliés l'un à l'autre par plusieurs points de soudure cela permet de fondre moins de matière pour une même solidité de la jonction.

Le disque 1 considéré est un disque rigide, le capot 3 pouvant être soit rigide soit partiellement ou totalement souple. Le capot 3 ou le disque 1 ou les deux sont transparents aux rayonnements lumineux.

Un procédé de soudure préférentiel de l'invention consiste à utiliser une soudure par ultra-sons. Pour ce faire, le capot 3, ou éventuellement le disque optique 1, comporte à sa surface des moulures en relief en forme d'anneau qui ayant été chauffées se ramolliront et mis en contact avec l'autre pièce se solidifieront alors et permettront alors la jonction par soudure.

Ces moulures peuvent avoir la forme de pointe et alors le procédé de soudure par ultra-sons est plus efficace.

Mais d'autres procédés sont aussi utilisables tel un procédé consistant au frottement des deux pièces que sont le disque 1 et son capot 3 de protection ou à l'emploi d'une lame chauffante.

Dans l'invention on ne considère plus une seule soudure large mais plusieurs petites soudures parallèles.

On peut aussi considérer une soudure au laser, il suffit de focaliser le faisceau sur la partie annulaire à souder pour ainsi l'échauffer. Pour une soudure en Haute Fréquence, il suffit de positionner la partie à souder entre deux électrodes et par échauffement réaliser la soudure. Dans ces deux cas il n'y a pas nécessité de cordons de soudure. Il suffit de réaliser des soudures annulaires concentriques proches les unes des autres.

Quel que soit le procédé considéré, on réalise donc deux joints situés de part et d'autre de la zone annulaire comportant la couche photosensible permettant l'enregistrement des informations. Chaque joint comporte au moins deux joints de soudure continus de forme annulaire concentriques et proches l'un de l'autre. Les joints de soudure ont une largeur, par exemple de 0,3 millimètre, la distance entre deux zones soudées du même joint étant comprise entre 0,4 et 6 millimètres.

Si on considère les joints formés de zones ininterrompues de soudure, ces zones étant situées sur la périphérie du disque optique et en son centre, on réalise ainsi des joints étanches de la cavité annulaire surplombant la partie du disque optique 1 recouverte de la couche sensible 2.

Dans la plupart des procédés de soudure, l'épaisseur de la zone fondue augmente avec la largeur du joint, alors que sa solidité est à peu près proportionnelle à sa largeur. Ainsi le remplacement d'une zone annulaire de soudure unique large par plusieurs zones de soudure annulaires plus petites donne une solidité équivalente pour une quantité de matière fondue moindre. Par exemple dans le cas d'une soudure par ultrasons, le remplacement d'un cordon de soudure de 1 millimètre × 1 millimètre par deux cordons de 0,5 millimètre × 0,5 millimètre fait passer la section de matière fondue de 1 millimètre à 0,25 millimètre carré. Or l'effort tangentiel périphérique, cause de la compression du disque, est directement proportionnel à la section de matière fondue.

D'autre part la rotation relative des deux pièces, disque 1 et capot 3, autour de l'axe d'une zone de soudure unique n'engendre qu'un couple de faible intensité étant donné la faible largeur de cette zone de soudure. Au contraire dans le cas d'un joint double, par exemple, le couple s'opposant à la rotation est égal au produit de la force sur la zone de soudure normale au plan du disque par la distance entre les deux zones de soudure. Ce couple est donc notablement plus grand que dans le cas d'une zone de soudure unique. Dans ce dernier cas la liaison entre les deux pièces, disque 1 et capot 3, peut être assimilée à une articulation. Dans le cas du joint double elle peut être assimilée à un encastrement ; la structure est alors beaucoup plus rigide et les déformations plus faibles.

Accessoirement la multiplication des zones annulaires de soudure que comporte chaque joint entre disque 1 et capot 3 améliore la fiabilité de l'étanchéité.

Si l'on considère l'exemple du procédé de soudure par ultra-sons, ces moulures avant soudure qui deviennent des cordons de soudure après soudure sont réalisées dans le même matériau que le capot 3 (ou éventuellement que le disque optique 1), ce disque 1, ce capot 3 peuvent être réalisés par usinage ou par injection de matière dans un moule.

Le disque 1 et le capot 3 ont les mêmes dimensions, par exemple 305 millimètres de diamètre et 1,5 millimètre d'épaisseur.

Les moulures sont solidaires de la pièce dont elles font partie et elles disparaissent lors de la soudure pour former des cordons de soudure.

Dans la suite de la description, on considère à titre non limitatif un procédé de soudure de type ultra-sons, mais les exemples des dispositifs obtenus, pourraient être réalisés tout aussi bien avec les autres procédés de soudure.

La figure 5 montre un exemple de disque 1 et de capot 3 selon le procédé de l'invention en considérant, à titre non limitatif, l'exemple d'une soudure par ultra-sons. La pointe unique 4 du cas précédent a été remplacée par deux pointes 15 et 6 plus petites. Il y a intérêt à augmenter l'écartement entre 15 et 6 pour obtenir une plus grande rigidité. De bons résultats ont été obtenus sur des substrats et capots en Polyméthacrylate de Méthyl (PMMA) de diamètre 305 millimètres et d'épaisseur 1,5 millimètre avec des pointes de hauteur 0,3 millimètre et de largeur 0,3 millimètre distantes de 3,8 millimètres. Des dimensions avantageuses des pointes se situent entre 0,15 et 0,45 millimètre en largeur et en épaisseur. Les pointes les plus grandes donnent des joints plus larges et plus résistants, mais nécessitent une puissance de soudure plus grande et entraînent des risques de déformation plus importante. Des pointes trop petites nécessitent une grande précision d'exécution des pièces et la qualité de la soudure devient très sensible aux défauts de parallélisme. La figure 6 représente les mêmes pièces après soudure.

Sur cette figure 6 le capot 3 et le disque 1 ne sont pas tout à fait jointifs ce qui est la réalité, en pratique on essaye de les rendre le plus jointifs possible.

Les deux joints 16 et 17 permettant la solidarisation entre le disque 1 et le capot 3 sont représentés à la figure 6 avec les anneaux de soudure correspondants 18, 19 et 20, 21.

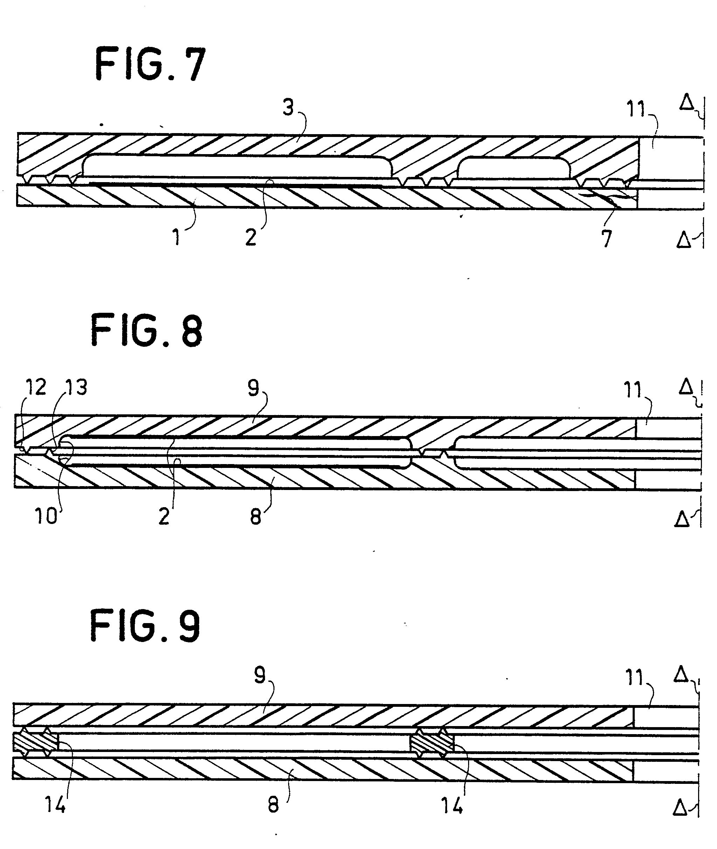

La figure 7 représente une variante de l'invention avec des soudures à trois cordons parallèles. Un troisième joint 7 de plus a été ajouté autour du trou de centrage 11 du disque 1, ce qui apporte au disque protégé une rigidité supplémentaire et diminue donc les déformations. Dans ce cas le disque 1 est de forme plus simple que le capot de protection 3.

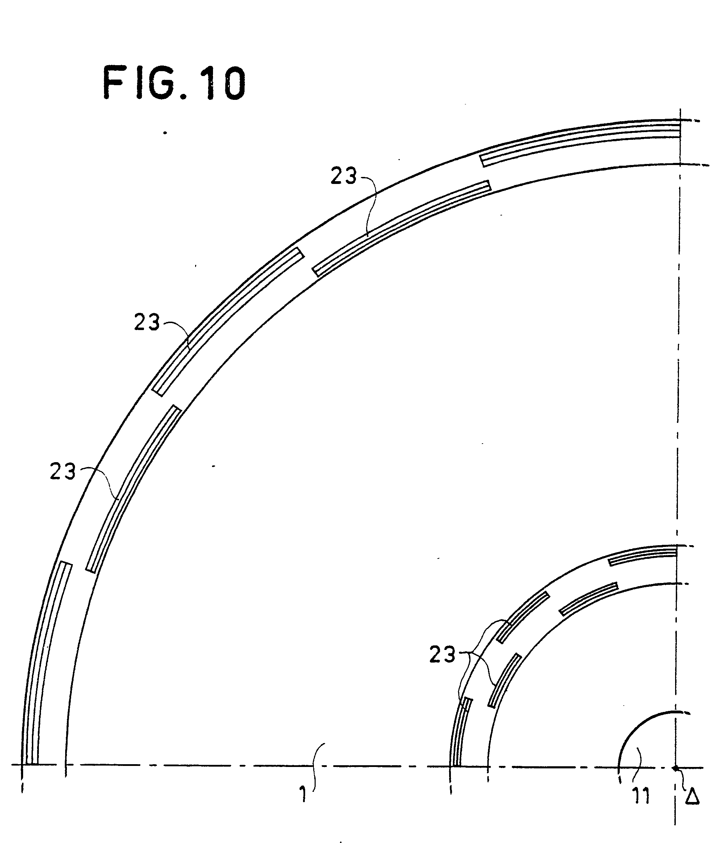

La figure 8 représente une autre variante de l'invention sous forme de disque double face. Chacun des substrats 8 et 9 est muni de portées 10 d'épaisseurs égales à la moitié de la distance requise entre les faces intérieures des substrats 8 et 9 qui peuvent porter chacun une couche sensible 2. Les pointes extérieures 12 peuvent être portées par 9 et les pointes intérieures 13 par 8 comme représenté figure 8, ce qui symétrise la structure obtenue. Les pointes peuvent aussi être divisées en secteurs d'égales longueurs portés alternativement par 8 et 9, comme représenté figure 10, les secteurs avec pointe de 8 venant s'emboîter dans les secteurs sans pointe de 9 et inversement. De cette manière la structure est parfaitement symétrique et les pièces 8 et 9 sont identiques et peuvent éventuellement être coulées ou injectées dans le même moule. Sur cette figure 10 est représenté le disque 1 avec les moulures en relief 23, mais le capot 3 a la même configuration.

Sur la figure 8, la soudure est réalisée dans le plan milieu du disque optique protégé, les deux pièces ayant été réalisées par exemple par injection dans un moule. On obtient ainsi une meilleure tenue mécanique.

Sur la figure 10 les deux pièces que sont le disque et le capot sont réalisées à partir d'un même moule. Elles peuvent s'emboîter l'une dans l'autre.

La figure 9 représente une autre variante de disque double face dans laquelle les substrats 8 et 9 peuvent être obtenus par découpage dans des plaques sans nécessiter un usinage ultérieur, en utilisant des entretoises 14 qui peuvent être par exemple comme sur la figure 9 des entretoises en forme d'anneau sur lesquelles sont réalisées des pointes. Ces entretoises doivent, d'ailleurs, être en matériau thermoplastique.

Sur toutes les figures les pointes sont représentées sous une forme triangulaire idéale, mais elles peuvent aussi avoir une forme arrondie, trapézoïdale ou même carrée, selon les procédés et les difficultés de réalisation. Les exemples de réalisation proposés sont également applicables au cas de la structure à un substrat et deux capots illustrés sur la figure 2.

**Revendications**

1. Procédé de fabrication d'un disque optique protégé comprenant :

une première étape de création d'un support circulaire (1) en matière thermoplastique comprenant une zone d'inscription annulaire plane (2) de même axe de symétrie (Δ) que celui du support (1) et d'au moins un capot de protection (3) en matière thermoplastique, ce support (1) et chaque capot (3) comprenant des zones de jonction par soudure ; ces zones situées sur ce support (1) se trouvant de part et d'autre de la zone d'inscription (2) ;

une deuxième étape de positionnement de chaque capot de protection par rapport à ce support (1) selon un même axe de symétrie (Δ) que celui de ce support (1), de façon à délimiter au moins une chambre annulaire (15) surplombant une zone d'inscription (2) ;

une troisième étape d'échauffement consistant à produire à l'emplacement desdites zones de jonction des joints de soudure continus qui solidarisent ce support (1) et chaque capot (3) de protection, deux au moins de ces joints de soudure continus assurant l'étanchéité de ladite chambre annulaire (15) ;

caractérisé en ce que pendant ladite troisième étape chacune des zones de jonction (16, 17) donne naissance à au moins deux joints de soudure continus épousant la forme d'anneaux (18, 19 et 20, 21) ; les anneaux appartenant à une même zone de jonction étant séparés l'un de l'autre par une distance comprise dans la gamme de 0,4 à 6 millimètres.

2. Procédé selon la revendication 1, caractérisé en ce que ladite troisième étape comprend la solidarisation du support (1) et d'un capot de protection (3) selon trois zones de jonction, les deux premières (16, 17) délimitant ladite chambre et la troisième (7) étant intérieure aux deux autres.

3. Procédé selon la revendication 1, caractérisé en ce que l'étape d'échauffement comporte l'apport de chaleur par lame chauffante, par friction, par champ électrique haute fréquence ou par rayonnement laser.

4. Procédé selon la revendication 1, caractérisé en ce que l'étape d'échauffement comporte l'apport de chaleur par ultra-sons.

5. Procédé selon la revendication 1, caractérisé en ce que dans la première étape les zones de jonction par soudure comportent des éléments en relief situés au moins sur le support ou la pièce destinée à lui être soudée.

6. Procédé selon la revendication 5, caractérisé en ce que ces éléments en relief (23) sont répartis sur le support (1) et sur chaque capot (3) de façon non sysmétrique et complémentaire, de manière à ce que lors de la deuxième étape ces éléments puissent être emboîtés les uns dans les autres.

7. Procédé selon la revendication 1, caractérisé en ce que la deuxième étape de positionnement de chaque capot (3) par rapport à ce support (1) comporte en outre le positionnement, à l'endroit des zones de jonction par soudure, d'entretoises (14) en matériau thermoplastique entre le support et chaque capot de protection.

8. Procédé selon la revendication 1, caractérisé en ce que dans la première étape le support (1) et chaque capot (3) sont obtenus par usinage.

9. Procédé selon la revendication 1, caractérisé en ce que dans la première étape le support (1) et chaque capot (3) sont obtenus par injection de matière fondue dans un moule.

10. Disque optique protégé comportant au moins une couche (2) destinée à interagir avec un rayonnement optique incident et abritée dans une chambre annulaire délimitée par deux pièces en matière thermoplastique ayant des zones de jonction par soudure qui épousent les contours intérieur et extérieur de ladite chambre annulaire ; l'une au moins de ces pièces étant transparente l'une de ces pièces étant un support circulaire (1) portant ladite couche dans une zone d'inscription annulaire plane, l'autre de ces pièces étant un capot (3), caractérisé en ce que l'assemblage desdites pièces est assuré dans chaque zone de jonction (16, 17) par au moins deux joints de soudure continus épousant la forme d'anneaux concentriques (18, 19 et 20, 21) ; les anneaux appartenant à une même zone de jonction étant séparés l'un de l'autre par une distance comprise dans la gamme de 0,4 à 6 millimètres.

11. Disque optique protégé selon la revendication 10, caractérisé en ce que le support (1) porte ladite couche sur chacune de ses faces, un capot de protection étant soudé à chacune de celles-ci.

12. Disque optique protégé selon la revendication 10, caractérisé en ce que le capot est constitué par un substrat comprenant une zone d'inscription annulaire (Fig. 8 et 9).

13. Disque optique protégé selon l'une quelconque des revendications 10 ou 12, caractérisé en ce que le support (1) et chaque capot sont réalisés en polyméthacrylate de méthyl.

**Claims**

1. A method of fabricating a protected optical disk comprising :

a first step which consists in forming a circular support (1) of thermoplastic material comprising a flat annular recording zone (2) having the same axis of symmetry (Δ) as that of the support (1) and at least one protective cover (3) of thermoplastic material, said support (1) and each cover (3) being provided with junction zones which are intended to be welded together, said zones located on said support (1) being located on either side of the recording zone (2) ;

a second step which consists in positioning each protective cover with respect to said support (1) along the same axis of symmetry (Δ) as that of said support (1) in order to delimit at least one annular chamber (15) located above a recording zone (2) ;

a third step which consists in heating and in producing continuous welded joints in the junction zones, by which said support (1) and each protective cover (3) are rigidly joint, at least two continuous joints ensuring tightness of said annular chamber (15),
characterized in that during the third step, in each junction zone (16, 17), at least two ring-shaped continuous welded joints are created (18, 19 and 20, 21), the rings of a common junction zone being mutually spaced at a distance within the range of 0,4 to 6 mm.

2. A method according to claim 1, characterized in that the third step comprises the rigid attachment of the support (1) to a protective cover (3) so as to form three junction zones, the first two zones (16, 17) being intended to delimit said annular chamber and the third zone (7) being located inside the other two said zones.

3. A method according to claim 1, characterized in that the method step of heating includes heating by a hot blade, by friction, by an electric high frequency or by a laser radiation.

4. A method according to claim 1, characterized in that the heating step includes heating by ultrasound.

5. A method according to claim 1, characterized in that the zones to be welded are formed, in the first step, by means of molded ribs located at least on the support or on the member intended to be welded thereto.

6. A method according to claim 5, characterized in that said molded ribs (23) are distributed on the support (1) and on each cover (3) in a non-symmetrical and complementary relation so as to ensure that said molded ribs can be mutually interlaced during the second step.

7. A method according to claim 1, characterized in that the second step in which each cover (3) is positioned with respect to said support (1) further consists in positioning spacer members (14) of thermoplastic material opposite to the zones to be welded, between said support and each protective cover.

8. A method according to claim 1, characterized in that the support (1) and each cover (3) are obtained by machining during the first step.

9. A method according to claim 1, characterized in that the support (1) and each cover (3) are obtained by injection of molten material into a mold during the first step.

10. A protected optical disk comprising at least one layer (2) conceived to interact with an incident optical radiation in an annular zone delimited by two elements made of thermoplastic material, these elements having zones to be welded which extend along the inner and outer border of said annular chamber, at least one of said elements being transparent, one of said elements being a circular support (1) bearing said layer in a flat annular recording zone whereas the other element is a cover (3), characterized in that the mutual attachment of said elements in ensured in each junction zone (16, 17) by at least two continuous welded joints presenting concentric rings (18, 19 and 20, 21), the rings of a common junction zone being mutually spaced at a distance within the range of 0,4 to 6 mm.

11. A protected optical disk according to claim 10, characterized in that the support (1) is provided with said layer on each of its faces, a protective cover being welded to either face of said disk.

12. A protected optical disk according to claim 10, characterized in that the cover is constituted by a substrate comprising an annular recording zone (Fig. 8 and 9).

13. A protected optical disk according to any one of claims 10 to 12, characterized in that the support (1) and each cover are fabricated from polymethyl methacrylate.


**Patentansprüche**

1. Verfahren zur Herstellung einer geschützten optischen Scheibe, das enthält :

einen ersten Verfahrensschritt der Bildung eines ebenen kreisförmigen Trägers (1) aus thermoplastischem Material mit einer ringförmigen ebenen Beschriftungszone (2) gleicher Symmetrieachse (Δ) wie die des Trägers (1) und mindestens einer Schutzabdeckung (3) aus thermoplastischem Material, wobei der Träger (1) und jede Abdeckung (3) Verbindungszonen durch Schweißen aufweisen und wobei die Zonen auf dem Träger (1) sich zu beiden Seiten der Beschriftungszone (2) befinden ;

einen zweiten Verfahrensschritt des Ausrichtens jeder Schutzabdeckung bezüglich des Trägers (1) gemäß einer gleichen Symmetrieachse (Δ) wie der Träger (1), so daß mindestens eine ringförmige Kammer (15) gebildet wird, die eine Beschriftungszone (2) überwölbt ;

einen dritten Verfahrensschritt der Erwärmung, der darin besteht, an Stellen dieser Verbindungszonen kontinuierliche Schweißverbindungen zu erzeugen, die den Träger (1) und jede Schutzabdeckung (3) miteinander verbinden, wobei mindestens zwei dieser kontinuierlichen Schweißverbindungen die Dichtheit der ringförmigen Kammer (15) sicherstellen,
dadurch gekennzeichnet, daß während des dritten Verfahrensschritts jede der Verbindungszonen (16, 17) mindestens zwei kontinuierliche Schweißverbindungen führt, die der Form von Ringen (18, 19 und 20, 21) angepaßt sind, wobei die einer gleichen Verbindungszone zugehörenden Ringe voneinander einen Abstand aufweisen, der zwischen 0,4 und 6 mm beträgt.

2. Verfahren nach Anspruch 1, dadurch gekennzeichnet, daß der dritte Verfahrensschritt die Befestigung des Trägers (1) und einer Schutzabdeckung (3) gemäß drei Verbindungszonen umfaßt, von denen die beiden ersten (16, 17) die Kammer begrenzen und die dritte (7) innerhalb der beiden anderen verläuft.

3. Verfahren nach Anspruch 1, dadurch gekennzeichnet, daß der Verfahrensschritt des Erhitzens die Zufuhr von Wärme durch eine Heizlamelle, durch Reibung, durch ein elektrisches Hochfrequenzfeld oder durch eine Laserstrahlung aufweist.

4. Verfahren nach Anspruch 1, dadurch gekennzeichnet, daß der Verfahrensschritt des Erhitzens die Wärmezufuhr durch Ultraschall aufweist.

5. Verfahren nach Anspruch 1, dadurch gekennzeichnet, daß in dem ersten Verfahrensschritt die Zonen der Verbindung durch Schweißen vorspringende Elemente aufweisen, die mindestens am Träger oder dem Teil angebracht sind, das dazu bestimmt ist, mit dem Träger verschweißt zu werden.

6. Verfahren nach Anspruch 5, dadurch gekennzeichnet, daß die vorspringenden Elemente (23) über den Träger (1) und jede Abdeckung (3) in unsymmetrischer und komplementärer Form verteilt sind, so daß während des zweiten Verfahrensschritts diese Elemente ineinander verschachtelt werden können.

7. Verfahren nach Anspruch 1, dadurch gekennzeichnet, daß der zweite Verfahrensschritt der Ausrichtung jeder Abdeckung (3) bezüglich des Trägers (1) außerdem das Anbringen von Abstandsstücken (14) aus thermoplastichem Material zwischen dem Träger und jeder Schutzabdeckung in Höhe der Schweißverbindungszonen umfaßt.

8. Verfahren nach Anspruch 1, dadurch gekennzeichnet, daß in dem ersten Verfahrensschritt der Träger (1) und jede Abdeckung (3) durch spanende Bearbeitung erhalten werden.

9. Verfahren nach Anspruch 1, dadurch gekennzeichnet, daß im ersten Verfahrensschritt der Träger (1) und jede Abdeckung (3) durch Einspritzen geschmolzenen Materials in eine Gießform erhalten werden.

10. Geschützte optische Scheibe mit mindestens einer Schicht (2), die dazu bestimmt ist, mit einer optischen einfallenden Strahlung zusammenzuwirken und die in einer ringförmigen, durch zwei Bauteile aus thermoplastischem Kunststoff begrenzten Kammer untergebracht ist, wobei diese Bauteile Zonen zur Verbindung durch Schweißung besitzen, die den inneren und den äußeren Umriß der ringförmigen Kammer beschreiben, und mindestens eines der Bauteile transparent ist, wobei eines der Bauteile ein kreisförmiger Träger (1) ist, der die Schicht in einer ebenen ringförmigen Beschriftungszone trägt, während das andere Bauteil eine Abdeckung (3) ist, dadurch gekennzeichnet, daß die Zusammenfügung der beiden Bauteile in jeder Verbindungszone (16, 17) durch mindestens zwei kontinuierliche Schweißverbindungen erfolgt, die die Form konzentrischer Ringe (18, 19 und 20, 21) beschreiben, wobei die derselben Verbindungszone angehörenden Ringe einen gegenseitigen Abstand zwischen 0,4 und 6 mm besitzen.

11. Geschützte optische Scheibe nach Anspruch 10, dadurch gekennzeichnet, daß der Träger (1) die Schicht auf jeder ihrer Seiten trägt und daß eine Schutzabdeckung auf jede dieser Seiten aufgeschweißt ist.

12. Geschützte optische Scheibe nach Anspruch 10, dadurch gekennzeichnet, daß die Abdeckung aus einem Substrat besteht, das eine ringförmige Beschriftungszone enthält (Fig. 8 und 9).

13. Geschützte optische Scheibe nach einem beliebigen der Ansprüche 10 bis 12, dadurch gekennzeichnet, daß der träger (1) und jede Abdeckung aus Polymethylmethacrylat hergestellt sind.

# FIG.1

# FIG.2

# FIG.3

# FIG.4

# FIG.5

# FIG.6

# FIG.7

# FIG.8

# FIG.9

# FIG. 10